# EUROPEAN PATENT SPECIFICATION

(11) **EP 0 562 885 B1**
(45) Date of publication and mention of the grant of the patent: **21.01.1998**
(21) Application number: 93302399.6
(22) Date of filing: 26.03.1993
(51) Int. Cl.: G06F 1/32, G06F 13/40

(54) **Reduction of power consumption in microprocessor devices**
Reduzierung des Stromverbrauches in Mikroprozessoren
Réduction de consommation de courant dans des microprocesseurs

(30) Priority: 27.03.1992 US 859110; 27.03.1992 US 858579
(43) Date of publication of application: 29.09.1993
(60) Divisional application: 97202629.8
(73) Proprietor: CYRIX CORPORATION, Richardson, Texas 75080 (US)
(72) Inventor: Maher, Robert D., Carrolton, Texas 75007 (US); Garibay,Raul A., Richardson,Texas 75080 (US); Herubin, Margaret R., Coppell, Texas 75019 (US); Bluhm, Mark, Carrolton, Texas 75007 (US)
(74) Representative: Cotter, Ivan John

(56) References cited:
- EP-A- 0 368 144
- US-A- 4 316 247
- PATENT ABSTRACTS OF JAPAN vol. 8, no. 27 (P-252)(1464) 4 February 1984 & JP-A-58 182 736 ( FUJITSU K. K. ) 25 October 1983
- '386 DX MICROPROCESSOR PROGRAMMER'S REFERENCE MANUAL' 1990 , INTEL Section 4.1.3

## Description

This invention relates in general to integrated circuits, and more particularly to microprocessor devices and to the reduction of power consumption in microprocessor devices.

Increasingly, electronic circuit manufacturers need to reduce the power consumption of their circuit boards. The conservation of power is particularly important in portable electronic devices, such as laptop or notebook computers, where the product is specifically designed for use in situations where power outlets are not available. Since laptop and notebook computers must operate using internal batteries or rechargeable battery packs for extended periods of time, the conservation of battery power becomes a primary concern.

In a laptop or notebook computer, the largest consumer of power is the display. The proportion of power consumed by the display will vary depending on the technology used. Thus, laptop and notebook computer manufacturers have disabled the power to the display during periods of inactivity. Decoupling the display from the power supply can be accomplished with fairly simple circuitry.

The next largest consumer of power on a laptop or notebook computer is the CPU motherboard microprocessor. Heretofore, computer manufacturers have used one or two techniques for reducing power consumption of the microprocessor during periods of inactivity. One technique reduces the speed of the system dock to a fraction of the normal operating frequency during periods of inactivity. Since the power consumption of the microprocessor is proportional to the frequency, reducing the frequency of the system clock also reduces the power consumption of the microprocessor. In an Intel 80386DX microprocessor (manufactured by Intel Corporation of Santa Clara, California), reducing the operating frequency from 33 MHz to 4 MHz reduces the typical operating current of the microprocessor from 400 to approximately 100 milliamps. Nevertheless, an operating current of 100 milliamps still poses a large power drain on the battery.

A second technique for reducing power turns off the system clock during periods of inactivity. Turning off the system clock affects all circuitry on the motherboard. Consequently, the circuitry which disables the system clock must also save all pertinent information in the microprocessor and associated board logic and restore the data upon resumption of activity such that the state of the computer after resumption of the system clock will be identical to the state of the computer prior to disabling the system clock. As a result, this technique for consuming power is both costly because of the complicated circuitry and slow because of the need to store and restore the state of the computer.

Therefore, a need has arisen in the industry to provide a method and apparatus for conserving power in an electronic device which significantly reduces the power drain of the microprocessor without the need for complicated external circuitry.

European Patent Application Publication No. EP-A-0 386 144 (Motorola) discloses a microcomputer system including a CPU, an intermodule bus (IMB) and a system integration module (SIM). The SIM provides an interface between the IMB and an external bus, and also provides certain system functions such as clock signal generation and distribution. A low power mode for the microcomputer system is initiated by the execution of a particular instruction LPSTOP by the CPU. When the LPSTOP instruction is received and decoded by a micro-machine 20, a number of control signals are produced which cause an execution unit and a bus interface to perform certain tasks. One or more control signals are produced which cause the bus interface to execute a special bus cycle, the LPSTOP cycle. The SIM responds to the LPSTOP cycle by halting the IMB clock signal CLOCK. The CPU and all of the other internal modules of the microcomputer system use CLOCK as the sole source of fundamental internal timing. Thus, when CLOCK is halted, all of these modules are also halted. This reduces power consumption. The SIM continues to generate clock signals for its own use, and so remains "awake" during the low power mode. An externally-supplied clock signal CLK may or may not be halted during the low power mode, depending on the state of a control bit which is set within the SIM under control of the CPU. It is also indicated that an alternative implementation would be to continue to produce and distribute a clock signal during the low power mode and also to produce an LPSTOP control signal which would be distributed to all internal modules. At each module, logic would respond to the LPSTOP control signal by either blocking the clock signals, thus shutting down the module, or not blocking the clock signals, thus allowing the module to continue operation during the low power mode. This alternative embodiment would entail increased power dissipation during the low power mode, but would provide increased flexibility by allowing some modules to continue operation during the low power mode.

US Patent US-A-4 316 247 (Iwamoto) discloses a microcomputer in which internal clocks are generated by a clock generator based on external clocks. The clock generation is halted in response to an external HALT signal during specific periods of an execution cycle.

According to a first aspect (claim 1) of the invention there is provided a microprocessor device comprising:
a first means comprising a plurality of subcircuits, one of said subcircuits including an instruction execution pipeline to receive and execute instructions;
a control means; and
an internal clock pulse generator operative to generate a first clock signal and a second clock signal, said internal clock pulse generator supplying said first clock signal to said first means and said second clock signal to said control means, said first clock signal controlling execution of instructions in the instruction execution pipeline;
said control means being coupled to a terminal of said microprocessor device and being responsive to assertion at said terminal of a power control signal generated externally of said microprocessor device to apply a first signal to said first means;
said first means being responsive to said first signal to cease advancing new instructions into the instruction execution pipeline, to execute instructions currently in the instruction execution pipeline, to initiate a power-down routine and to cause the generation of a second signal; and
said control means being responsive to said second signal to output a microprocessor device output signal and to apply a third signal to said internal clock pulse generator to cause it to disable the supply of said first clock signal to said first means.

According to a second aspect (claim 9) of the invention there is provided a method of reducing power consumption in a microprocessor device during execution of a sequence of instructions supplied to an instruction execution pipeline, comprising the steps of:
generating, internally of the microprocessor device, by an internal clock pulse generator, a first clock signal and a second clock signal;
supplying said first clock signal to a first means including the instruction execution pipeline and supplying said second clock signal to a control means, said first clock signal controlling execution of instructions in the instruction execution pipeline;
in response to assertion of a power control signal, generated externally of said microprocessor device, at a terminal of said microprocessor device, applying a first signal from said control means to said first means;
in response to said first signal, said first means ceasing to advance new instructions into the instruction execution pipeline, executing instructions currently in the instruction execution pipeline, initiating a power-down routine and causing the generation of a second signal; and
in response to said second signal, said control means outputting a microprocessor device output signal and applying a third signal to said internal clock pulse generator to cause it to disable the supply of said first clock signal to said first means.

In accordance with a preferred form of implementation of the present invention described hereinbelow, a method and apparatus is provided which provides significant advantages in reducing the power consumption of, and providing enhanced features for, a microprocessor.

According to one feature of the preferred form of implementation of the present invention, a processing unit includes a plurality of subcircuits and circuitry for generating a clock signal thereto. Circuitry is provided for detecting the assertion of a control signal; responsive to the control signal, disabling circuitry disables the clock signal to one or more of the subcircuits.

This feature provides significant advantages over the prior art. A significant reduction in the power consumed by a computer may be effected by disabling the clock to the microprocessor circuitry. The feature allows the disabling and enabling of the microprocessor clock signals to be controlled by a single control signal. Further, an acknowledge signal may be provided to notify external circuitry of the suspended state of the microprocessor.

A preferred form of implementation, described herein, of the present invention comprises a microprocessor having a plurality of input/output pins and processing circuitry coupled to the input-output pins. Circuitry is provided for selectively decoupling the processing circuitry from the input/output pins.

Specifically, tri-state buffers are coupled between the processing circuitry and the input/output pins. The tri-state buffers are controlled by the output of a register. The register may be part of a register file which is addressable via the input/output ports accesses. Initially, the register is set to a predetermined value; in the preferred embodiment, the register is set such that the tri-state buffers are in a high impedance mode.

This feature provides significant advantages. Enhanced features may be provided in the microprocessor which require pins not found on other x86 compatible microprocessors. The enhanced feature pins may be selectively disabled by the tri-state devices to ensure compatibility with x86 microprocessor architecture. In situations where the enhanced features are supported, the pins may be selectively enabled through software.

For a more complete understanding of the present invention, and the advantages thereof, reference is now made to the following descriptions taken in conjunction with the accompanying drawings, in which:
FIGURE 1 illustrates a block diagram of a computer system;
FIGURE 2 illustrates a block diagram of the preferred embodiment of a microprocessor used in the computer system of FIGURE 1;
FIGURE 3 illustrates a detailed block diagram of portions of the microprocessor of FIGURE 2 related to the power management circuitry;
FIGURE 4 illustrates a flow chart describing a preferred embodiment of operation for reducing microprocessor power consumption;
FIGUREs 5a-b illustrate circuitry for enabling and disabling pins providing power management control signals; and
FIGURE 6 illustrates a flow chart of the operation of software controlled embodiment for conserving microprocessor power consumption.

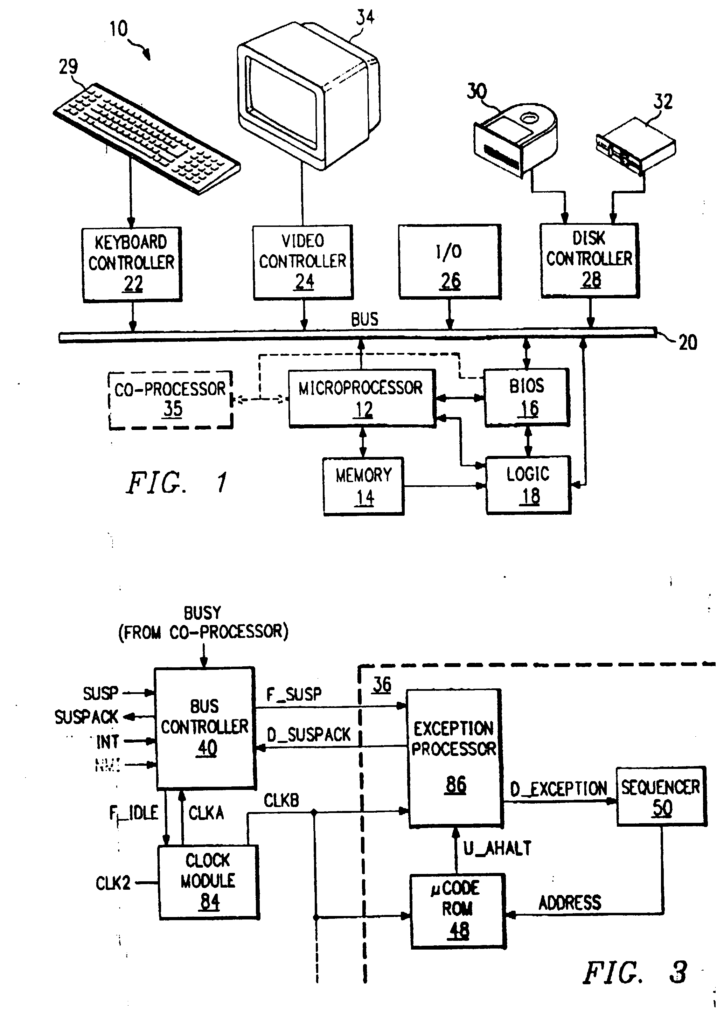

The preferred embodiment of the present invention and its advantages are best understood by referring to FIGUREs 1-6 of the drawings, like numerals being used for like and corresponding parts of the various drawings.

FIGURE 1 illustrates a block diagram of a computer system. The computer system 10 comprises a microprocessor CPU chip 12 coupled to a memory subsystem 14, BIOS ROM 16 and logic circuit chips 18 (commonly referred to as the "chipset"). Microprocessor 12 is coupled to bus 20. Bus 20 is used to communicate with a number of peripheral devices, shown in FIGURE 1 as keyboard controller 22, video controller 24, I/O circuitry 26 and disk controller 28. Keyboard controller 22 is coupled to keyboard 29. Disk controller 28 is coupled to hard disk 30 and floppy disk 32. Video controller 24 is coupled to display 34. An optional coprocessor 35 is coupled to microprocessor 12 and BIOS ROM 16.

The computer system 10 shown in FIGURE 1 is a general-purpose architecture common to personal computers such as the IBM Personal Computer and compatibles. The BIOS 16 (basic input/output system) is typically a read-only memory which contains a set of programs for performing the basic control and supervision operations for the computer system 10. The BIOS 16 acts as an interface between the computer circuitry and the application software being executed by the CPU 12. Importantly, for power consumption purposes, the BIOS 16 and logic 18 monitor selected circuitry to determine whether power consumption reduction procedures may be invoked. For example, the BIOS 16 and/or logic 18 may monitor the display 34 to determine whether its output has changed over a predetermined time period. If not, the BIOS 16 may invoke procedures to disable power to the display 34 (assuming computer system 10 is a portable computer) to conserve energy. Further, BIOS 16 monitors microprocessor 12 to determine whether the microprocessor can be idled without affecting operation of the computer system 10. For example, the microprocessor 12 may be executing a routine to wait for a character from the keyboard. In this case, the operation of the microprocessor can be suspended until a key is pressed.

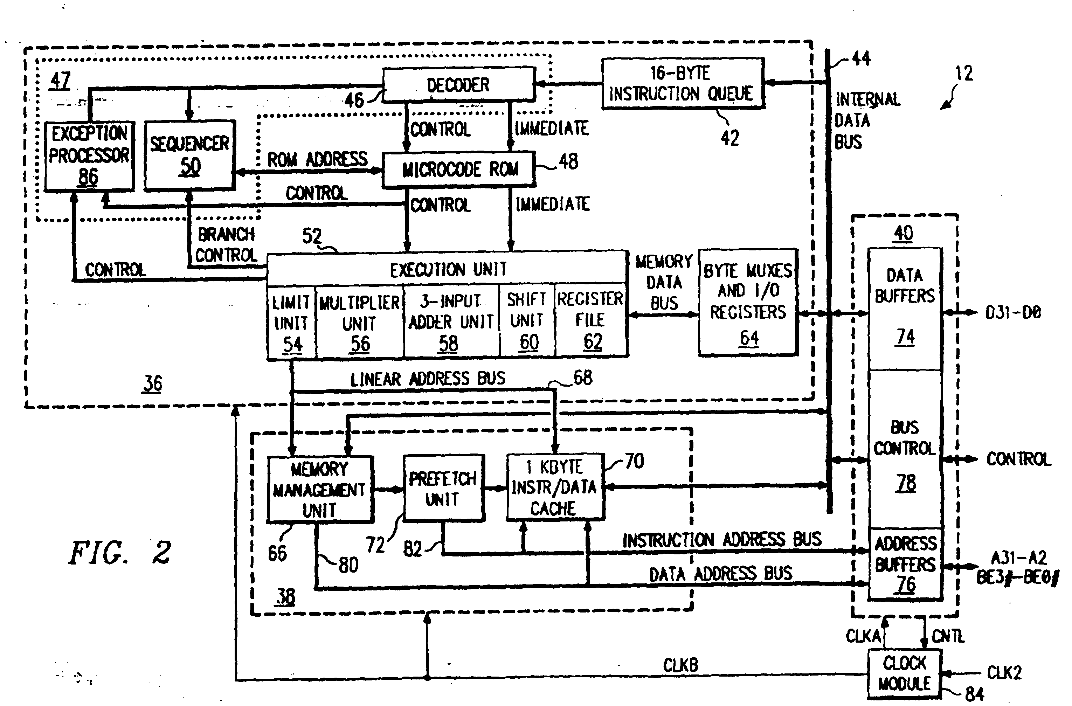

FIGURE 2 illustrates a detailed block diagram of the various subcircuits of a preferred embodiment of the microprocessor 12. For purposes of illustration, the microprocessor 12 will be described in connection with a microprocessor which is pin-compatible and instruction-compatible with the 80x86 family of processors by Intel Corporation, specifically the 80386 microprocessor although the invention could be used in other processors as well. The microprocessor 12 comprises three main functional groups: the core circuitry 36, the memory circuitry 38 and the bus controller 40. The core circuitry 36 includes an instruction queue 42 coupled to an internal data bus 44. The output of the instruction queue 42 is coupled to a decoder 46 of the decode/sequence circuitry 47. The decode/sequence circuitry 47 also includes a sequencer 50 and an exception processor 86. The decoder 46 is coupled to a microcode ROM 48, exception processor 86 and sequencer 50. The sequencer 50 is also coupled to the microcode ROM 48 and to an execution unit 52. The execution unit includes a limit unit 54, a multiplier unit 56, an adder unit 58, a shift unit 60, and a register file 62. The execution unit 52 is coupled to the microcode ROM 48 and to multiplexer and I/O register circuitry 64. The memory circuitry 38 comprises a memory management unit 66 coupled to a linear address bus 68 which is also connected to the execution unit 52 and an instruction/data cache memory 70. Memory management unit 66 is further coupled to the internal data bus 44. A prefetch unit 72 is coupled between the memory management unit 66 and the cache 70. Bus controller 40 includes data buffers 74, address buffers 76 and control circuitry 78. The data buffers 74 are coupled to the data I/O pins D31-D0, the address buffers 76 are coupled to the address pins A31-A2 and BE3#-BE0#. A data address bus 80 couples the memory management unit 66, the cache 70 and the address buffer 76. An instruction address bus 82 couples the prefetch unit 72, cache 70 and address buffer 76. The data buffers 74 are coupled to the internal data bus 44.

Clock module 84 receives an external clock signal (CLK2) and generates CLKA (connected to the bus controller 40) and CLKB (coupled to the memory circuitry 38 and the core circuitry 36). CLKA and CLKB are both clock signals of one-half the frequency of CLK2. Clock module 84 receives control signals from bus controller 40.

In operation, instructions are received by the microprocessor 12 from external memory under control of the memory management unit 66. For enhanced performance, an instruction/data cache 70 caches instruction and data received through the bus controller 40. Instructions are stored in the instruction queue 42 and are subsequently translated by the decode circuitry 46 into microcode. The sequencer points to the next address in the microcode ROM 48 under control of the decoder 46 and the execution unit 52. The execution unit 52 processes information under control of the microcode ROM 48.

In the preferred embodiment, the microprocessor 12 has a static design, i.e., retention of data in the internal memories and registers of the microprocessor 12 is not dependent upon the clock signal. As described in greater detail herein below, the clock module 84, under control of the bus controller 40, can disable clock to the subcircuits of the core circuitry 36 and the memory circuitry 38 while continuing to generate clock signals to the bus controller 40. Thus, during periods of inactivity, a large portion of the circuitry of the microprocessor may be suspended, thereby greatly reducing the power consumed by the microprocessor 12.

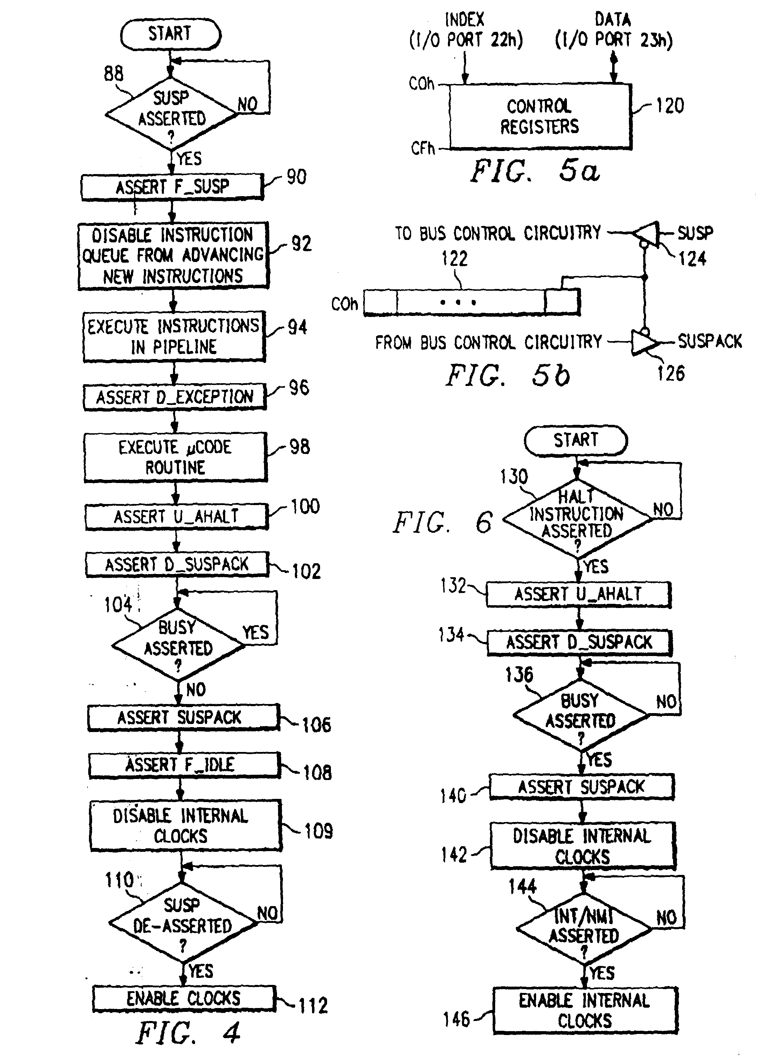

FIGUREs 3 and 4 describe the power reduction circuitry in greater detail. FIGURE 3 is a block diagram showing control signals between various portions of the microprocessor. The bus controller 40 controls signals from external pins of the microprocessor 12. A suspend (SUSP) signal is input to the bus controller 40 and a suspend acknowledge (SUSPACK) is output from the bus controller 40. A busy (BUSY) is received by the bus controller 40 from the coprocessor 35. The bus controller 40 also receives a maskable interrupt (INTR) and a non-maskable interrupt (NMI). The bus controller 40 outputs an interrupt (or "exception") F_SUSP to the exception processor 86 and receives a control signal D_SUSPACK. The exception processor 86 also monitors the microcode ROM 48, bus controller 40 and execution unit 52 to determine whether instructions are being executed. The exception processor 86 outputs a signal D_EXCEPTION to the sequencer 50 and receives a control signal U_AHALT from the microcode ROM 48. The bus controller 40 outputs a control signal F_IDLE to the clock module 84.

In operation, an external circuit (typically the BIOS 16 in conjunction with the logic 18) detects conditions where microprocessor operations could be suspended (for example, when the microprocessor is executing a routine to wait for a character from the keyboard). Upon detection of such a situation, the external circuit asserts the SUSP pin (for example, by driving the SUSP pin with a logical low voltage). In response to the assertion of the SUSP signal, the bus controller 40, in conjunction with the exception processor 86, asserts the F_IDLE control signal to the clock module 84. In response to the assertion of the F_IDLE signal, the clock module 84 disables the CLKB clock signals (by holding the disabled clock signal at a logical high or logical low voltage), while continuing to generating the CLKA clock signals. Since the design of the microprocessor is static, the memories do not require refreshing, and therefore suspending the clock will not result in a loss of data within the microprocessor 12. The SUSPACK signal is asserted to notify external circuitry that the microprocessor 12 is in the suspended state. To resume operation of the microprocessor 12, the SUSP signal is de-asserted (i.e., by applying a logical low voltage to the SUSP pin), for example, upon detection by BIOS 16 and logic 18 of a signal from the keyboard.

By suspending the clocks to the core circuitry 36 and memory circuitry 38, a significant reduction in the power consumed by the microprocessor 12 is realized. The bus controller 40 remains active to observe and control I/O signals between the microprocessor 12 and the external circuitry.

FIGURE 4 illustrates a flow chart showing a more detailed operation of the suspend mode. In decision block 88, a loop is formed waiting for the SUSP signal to be asserted. In block 90, after the SUSP signal is asserted, the bus controller 40 asserts the F_SUSP signal, which is coupled to the exception processor 86. In block 92, in response to the assertion of the F_SUSP signal, the instruction queue 42 is prevented from advancing new instructions. In block 94, the decoder 46 ceases to advance new instructions to the microcode ROM 48 and any instructions currently being processed by the microcode ROM 48 or execution unit 52 (collectively, the "pipeline") are completed, including any activity by the bus controller 40 related to the instructions in the pipeline. After all instructions in the pipeline have been executed, the control signal D_EXCEPTION is asserted by the exception processor 86 in block 96. D_EXCEPTION is received by the sequencer 50 which initiates a power-down microcode routine (block 98) responsive to D_EXCEPTION. The power-down microcode routine prepares the microprocessor for suspend mode. In block 100, the microcode ROM 48 asserts the control signal U_AHALT to the exception processor 86. In response to receiving U_AHALT, the exception processor 86 asserts D_SUSPACK to the bus controller 40 in block 102. In decision 104, the bus controller 40, after receiving D_SUSPACK from the exception processor, checks the busy signal received from the coprocessor. So long as the busy signal from the coprocessor is asserted, the SUSPACK signal to the external circuitry will not be asserted and CLKB will not be disabled. Once, the busy signal is de-asserted by the coprocessor, the SUSPACK signal is asserted by the bus controller 40 to alert the external circuitry that the microprocessor 12 is in a suspended state and that the coprocessor is not currently performing any calculations, and may also be suspended. In block 108, F_IDLE is asserted by the bus controller 40 to the block module 84. In response to the assertion of the F_IDLE signal, the clock module 84 disables the CLKB in block 109, thereby suspending operation of the core circuitry 36 and memory circuitry 38. The bus controller 40 then waits until the SUSP signal is de-asserted in decision block 110. Upon de-assertion of the SUSP signal, CLKB is resumed.

Most microprocessors, including the 80386, do not use all available pins on the chip package. Thus, the SUSP and SUSPACK signals may be communicated to and from the microprocessor 12 using unused pins, thereby maintaining compatibility with a pre-existing technology. Nonetheless, in the preferred embodiment, the pins for the SUSP and SUSPACK signals may be selectively enabled or disabled. In the preferred embodiment, the SUSP and SUSPACK pins are initially disabled, and the BIOS 16 must be configured to enable the pins in its start-up routine. To effect enabling or disabling of the SUSP and SUSPACK pins, a control bit is provided which may be written to or read from via preselected I/O ports. The preferred embodiment of this aspect is shown in greater detail in connection with FIGUREs 5a-b.

In FIGURE 5a, a plurality of control registers in the microprocessor 12 (FIGURE 1) are accessible using INDEX and DATA signals input to the control registers 120. The majority of the registers (and bits thereof) are used for configuring the cache memory subsystem. For example, the control registers may be used to define non-cacheable regions of the main memory 14, to select the cache method (direct-mapped or set associative), and to enable flushing of the cache memory 70 via an external pin. Each control register is accessible by writing the address (referred to herein as the INDEX) of the register to an I/O port, shown in FIGURE 5a as I/O port 22h. Another I/O port, shown herein as I/O port 23h, is used to read or write data from the specified control register. In the preferred embodiment, each I/O port 23h operation is preceded by an I/O port 22h operation, otherwise the second and later I/O port 23h operation would be directed off-chip. In the illustrated embodiment of FIGURE 5a, the control registers each have an index between C0h and CFh.

In FIGURE 5b, the register 122 having an index of C0h uses its least significant bit to control tri-state devices 124 and 126 (each of which includes, in addition to HI and LO states, a high impedance third state). A bit equal to a logical high (i.e., a logical "1") enables both tri-state devices 124 and 126 to provide transmission of the SUSP and SUSPACK signals. A logical "0" disables the tristate devices 124 and 126 and thereby isolates the SUSP and SUSPACK pins from the circuitry of the microprocessor 12.

This aspect of the preferred embodiment ensures pin-compatibility with an existing microprocessor pin structures.

FIGURE 6 illustrates another aspect of the present invention wherein the operation of the microprocessor 12 may be suspended responsive to a software command.
80x86 devices support a "HALT" operation (Opcode F4) which stops execution of all instructions and places the 80x86 in a HALT state. Execution is resumed responsive to a non-maskable interrupt (on the NMI pin) coupled to the bus controller 40, an unmasked interrupt (on the INTR pin coupled to the bus controller 40) or a RESET. Normally, this instruction is used as the last instruction in a sequence which shuts down the system.

In the present invention, however, the HALT instruction has essentially the same consequence as asserting the SUSP pin. Thus, the BIOS 16 can issue a HALT instruction to the microprocessor 12, thereby disabling CLKB. Again, disabling CLKB will result in a significant reduction of power consumed by the microprocessor 12.

FIGURE 6 illustrates a flow chart showing the operation of the HALT instruction in the preferred embodiment. Once a HALT instruction to the microprocessor 12 is received in decision block 130, U_AHALT is asserted by the microcode ROM 48 in block 132. In response to the U_AHALT signal from the microcode ROM, the exception processor 86 asserts D_SUSPACK. After checking the busy signal from the coprocessor in decision block 136, the SUSPACK signal is asserted in block 140 by the bus controller 40 and the internal CLKB clock is disabled in block 142. In decision block 144, the microprocessor 12 remains in the suspended state until an interrupt is asserted in decision block 144. Once the interrupt is asserted, the CLKB clock is enabled and processing continues.

The HALT instruction allows the BIOS 16 to place the microprocessor 12 in a suspended state without any additional hardware connections to the microprocessor.

The present invention provides significant advantages over the prior art. By suspending the docks to the core circuitry and memory circuitry, a current consumption of less than 10 miliamps has been demonstrated. Since most BIOS programs support power conservation measures, the additional coding for supporting the SUSP and SUSPACK signals is relatively simple. Alternatively, the chipset logic 18 can be modified to support generation of the SUSP and SUSPACK signals. Further, since the SUSPACK, in the preferred embodiment, is not asserted until after coprocessor operations are completed, the BIOS does not have to provide additional circuitry or codes for monitoring the coprocessor. Further, the power saving circuitry may be provided on the microprocessor chip without sacrificing pin-compatibility. Additionally, by using the enhanced HALT command, the microprocessor may be operated in a suspended state without any hardware interaction, other than asserting an interrupt to bring the microprocessor 12 out of a suspended state.

## Claims

1. A microprocessor device (12) comprising:
a first means (36, 38) comprising a plurality of subcircuits (36, 38), one of said subcircuits including an instruction execution pipeline (48, 52) to receive and execute instructions;
a control means (40); and
an internal clock pulse generator (84) operative to generate a first clock signal (CLKB) and a second clock signal (CLKA), said internal clock pulse generator (84) supplying said first clock signal (CLKB) to said first means (36, 38) and said second clock signal (CLKA) to said control means (40), said first clock signal (CLKB) controlling execution of instructions in the instruction execution pipeline (48, 52);
said control means (40) being coupled to a terminal of said microprocessor device (12) and being responsive to assertion at said terminal of a power control signal (SUSP) generated externally of said microprocessor device (12) to apply a first signal (F_SUSP) to said first means (36, 38);
said first means (36, 38) being responsive to said first signal (F_SUSP) to cease advancing new instructions into the instruction execution pipeline, to execute instructions currently in the instruction execution pipeline, to initiate a power-down routine and to cause the generation of a second signal (D_SUSPACK); and
said control means (40) being responsive to said second signal (D_SUSPACK) to output a microprocessor device output signal (SUSPACK) and to apply a third signal (F_IDLE) to said internal clock pulse generator (84) to cause it to disable the supply of said first clock signal (CLKB) to said first means (36, 38).

2. A microprocessor device according to Claim 1, wherein said first means (36, 38) includes an exception processor (86) coupled to the instruction execution pipeline (48, 52), wherein said control means (40) applies said first signal (F_SUSP) to the exception processor to prevent advance of new instructions to the instruction execution pipeline (48,52), and wherein, after said execution of instructions currently in the instruction execution pipeline, the exception processor outputs a fourth signal (D_EXCEPTION) to enable the initiation of said power-down routine.

3. A microprocessor device according to Claim 1 or Claim 2, wherein said internal clock pulse generator (84) continues to supply said second clock signal (CLKA) to said control means (40) when the supply of said first clock signal (CLKB) to said first means (36, 38) is disabled.

4. A microprocessor device according to any of Claims 1-3, including means (40) to enable the internal clock pulse generator (84) to resume supply of said first clock signal (CLKB) to said first means (36, 38) in response to deassertion of said external power control signal (SUSP).

5. A microprocessor device according to any of Claims 1-4, wherein said instruction execution pipeline (48, 52) comprises an instruction execution device (52) coupled to receive microinstructions for execution from a microinstruction store (48) under control of an instruction decoder (46).

6. A microprocessor device according to Claim 5, wherein said control means (40) inhibits output by said instruction decoder (46) by applying said first signal (F_SUSP) to said first means.

7. A computer system comprising a microprocessor device according to any of Claims 1-6, said computer system further comprising: a reference clock signal (CLK2) source coupled to said internal clock pulse generator (84) to determine the frequency of said first and second clock signals (CLKB, CLKA) supplied by the internal clock pulse generator; and means to assert, independently of said clock signals, said external power control signal (SUSP) at said microprocessor terminal; and wherein said microprocessor device output signal (SUSPACK) provides a signal to said computer system of an operations suspended state of the microprocessor device.

8. A computer system according to Claim 7, which includes logic (18) responsive to operating conditions of said computer system, subsequent to assertion of said power control signal (SUSP), requiring resumption of operations by said microprocessor, to deassert said power control signal to enable the control means (40) to cause resumption of the previously disabled supply of said first clock signal (CLKB) by said internal clock pulse generator (84).

9. A method of reducing power consumption in a microprocessor device (12) during execution of a sequence of instructions supplied to an instruction execution pipeline (48, 52), comprising the steps of:
generating (84), internally of the microprocessor device (12), by an internal clock pulse generator (84), a first clock signal (CLKB) and a second clock signal (CLKA);
supplying said first clock signal (CLKB) to a first means (36, 38) including the instruction execution pipeline (48, 52) and supplying said second clock signal (CLKA) to a control means (40), said first clock signal (CLKB) controlling execution of instructions in the instruction execution pipeline (48, 52);
in response to assertion of a power control signal (SUSP), generated externally of said microprocessor device (12), at a terminal of said microprocessor device (12), applying a first signal (F_SUSP) from said control means (40) to said first means (36, 38);
in response to said first signal, said first means (36, 38) ceasing to advance new instructions into the instruction execution pipeline, executing instructions currently in the instruction execution pipeline, initiating a power-down routine and causing the generation of a second signal (D_SUSPACK); and
in response to said second signal (D_SUSPACK), said control means (40) outputting a microprocessor device output signal (SUSPACK) and applying a third signal (F_IDLE) to said internal clock pulse generator to cause it to disable the supply of said first clock signal (CLKB) to said first means (36, 38).

10. A method according to Claim 9, wherein the supply of said second clock signal (CLKA) to said control means (40) is continued when the supply of said first clock signal (CLKB) to said first means (36, 38) is disabled.

11. A method according to Claim 9 or Claim 10, wherein the supply of said first clock signal (CLKB) to said first means (36, 38) is resumed by deassertion of said external power control signal (SUSP).

12. A method according to any of Claims 9-11, wherein the frequency of said clock signals (CLKB, CLKA) is determined by a reference clock signal (CLK2) generated externally of the microprocessor device (12).

## Patentansprüche

1. Eine Mikroprozessor-Vorrichtung (12) mit:
einer ersten Einrichtung (36, 38), die eine Vielzahl von Subschaltkreisen (36, 38) aufweist, wobei einer der Subschaltkreise eine Befehlsausführungspipeline (48, 52) aufweist, um Befehle zu empfangen und auszuführen;
einer Steuereinrichtung (40); und
einem Pulsgenerator (84) für interne Taktsignale, der ein erstes Taktsignal (CLKB) und ein zweites Taktsignal (CLKA) erzeugt, wobei der Pulsgenerator (84) für interne Taktsignale das erste Taktsignal (CLKB) der ersten Einrichtung (36, 38) und das zweite Taktsignal (CLKA) der Steuereinrichtung (40) zuführt, und wobei das erste Taktsignal (CLKB) die Ausführung der Befehle in der Befehlsausführungspipeline (48, 52), steuert;
wobei die Steuereinrichtung (40) mit einem Anschluß der Mikroprozessorvorrichtung (12) gekoppelt ist und auf das Anlegen eines außerhalb der Mikroprozessorvorrichtung (12) erzeugten Leistungssteuersignals (SUSP) an den Anschluß reagiert, um ein erstes Signal (F_SUSP) an die erste Einrichtung (36, 38) anzulegen;
wobei die erste Einrichtung (36, 38) auf das erste Signal (F_SUSP) reagiert, um das Vorrücken neuer Befehle in die Befehlsausführungspipeline einzustellen, um die gegenwärtig in der Befehlsausführungspipeline befindlichen Befehle auszuführen, um eine Abschaltroutine zu initiieren und um die Erzeugung eines zweiten Signals (D_SUSPACK) zu bewirken; und
wobei die Steuereinrichtung (40) auf das zweite Signal (D_SUSPACK) reagiert, um ein Mikroprozessorvorrichtungsausgangssignal (SUSPACK) auszugeben und um ein drittes Signal (F_IDLE) an den Pulsgenerator (84) für interne Taktsignale anzulegen, um zu bewirken, daß er die Zuführung des ersten Taktsignals (CLKB) zu der ersten Einrichtung (36, 38) deaktiviert.

2. Eine Mikroprozessorvorrichtung nach Anspruch 1, dadurch gekennzeichnet, daß die erste Einrichtung (36, 38) einen Ausnahmeprozessor (86) aufweist, der mit der Befehlsausführungspipeline (48, 52) gekoppelt ist, dadurch gekennzeichnet, daß die Steuereinrichtung (40) das erste Signal (F_SUSP) an den Ausnahmeprozessor anlegt, um das Vorrücken neuer Befehle zur Befehlsausführungspipeline (48, 52) zu verhindern, und dadurch gekennzeichnet, daß, nach der Ausführung der gegenwärtig in der Befehlsausführungspipeline befindlichen Befehle, der Ausnahmeprozessor ein viertes Signal (D_EXCEPTION) ausgibt, um die Initiierung der Abschaltroutine auszulösen.

3. Eine Mikroprozessorvorrichtung nach Anspruch 1 oder Anspruch 2, dadurch gekennzeichnet, daß der Pulsgenerator (84) für interne Taktsignale damit fortfährt, das zweite Taktsignal (CLKA) der Steuereinrichtung (40) zu zuführen, wenn die Zuführung des ersten Taktsignals (CLKB) zu der ersten Einrichtung (36, 38) deaktiviert wird.

4. Eine Mikroprozessorvorrichtung gemäß einem der Ansprüche 1 bis 3, die eine Einrichtung (40) aufweist, um es dem Pulsgenerator (84) für interne Taktsignale zu ermöglichen, die Zuführung des ersten Taktsignals (CLKB) zu der ersten Einrichtung (36, 38) als Reaktion auf eine Deaktivierung des externen Leistungssteuersignals (SUSPACK) wieder aufzunehmen.

5. Eine Mikroprozessorvorrichtung nach einem der Ansprüche 1 bis 4, dadurch gekennzeichnet, daß die Befehlsausführungspipeline (48, 52) eine Befehlsausführungsvorrichtung (52) aufweist, gekoppelt, um Mikrobefehle zur Ausführung von einem Mikrobefehlsspeicher (48) unter Steuerung eines Befehlsdecodierers (46) zu empfangen.

6. Eine Mikroprozessorvorrichtung nach Anspruch 5, dadurch gekennzeichnet, daß die Steuereinrichtung (40) die Ausgabe durch den Befehlsdecodierer (46) mittels Anlegen des ersten Signals (F_SUSP) an der ersten Einrichtung sperrt.

7. Ein Computersystem, das eine Mikroprozessorvorrichtung gemäß einem der Ansprüche 1 bis 6 aufweist, dadurch gekennzeichnet, daß das Computersystem desweiteren aufweist: eine Quelle für ein Referenztaktsignal (CLK2), die mit dem Pulsgenerator (84) für interne Taktsignale gekoppelt ist, um die Frequenz der ersten und zweiten Taktsignale (CLKB, CLKA), die durch den Pulsgenerator für interne Taktsignale zugeführt werden, zu bestimmen; und eine Einrichtung, um, unabhängig von den Taktsignalen, das externe Leistungssteuersignal (SUSP) an den Mikroprozessoranschluß anzulegen; und wobei das Mikroprozessorvorrichtungsausgangssignal (SUSPACK) dem Computersystem ein Signal über einen Zustand vorübergehender Einstellung der Operationen der Mikroprozessorvorrichtung bereitstellt.

8. Ein Computersystem nach Anspruch 7, das eine Logik (18) aufweist, die auf die Betriebsbedingungen des Computersystems reagiert, nachfolgend auf das Anlegen des Leistungssteuersignals (SUSP), die eine Wiederaufnahme der Operationen durch den Mikroprozessor erfordern, um das Leistungssteuersignal zu deaktivieren, um es der Steuereinrichtung (40) zu ermöglichen, die Wiederaufnahme der zuvor deaktivierten Zuführung des ersten Taktsignals (CLKB) durch den Pulsgenerator (84) für interne Taktsignale zu bewirken.

9. Ein Verfahren zum Reduzieren des Stromverbrauchs in einer Mikroprozessorvorrichtung (12) während der Ausführung einer Folge von Befehlen, die einer Befehlsausführungspipeline (48, 52) zugeführt werden, mit den Verfahrensschritten:
Erzeugen (84), innerhalb der Mikroprozessorvorrichtung (12), mittels eines Pulsgenerators (84) für interne Taktsignale, eines ersten Taktsignals (CLKB) und eines zweiten Taktsignals (CLKA);
Zuführen des ersten Taktsignals (CLKB) zu einer ersten Einrichtung (36, 38), die die Befehlsausführungspipeline (48, 52) aufweist, und Zuführen des zweiten Taktsignals (CLKA) zu einer Steuereinrichtung (40), wobei das erste Taktsignal (CLKB) die Ausführung von Befehlen in der Befehlsausführungspipeline (48, 52) steuert;
Anlegen eines ersten Signals (F_SUSP) von der Steuereinrichtung (40) an der ersten Einrichtung (36, 38) als Reaktion auf das Anlegen eines außerhalb der Mikroprozessorvorrichtung (12) erzeugten Leistungssteuersignals (SUSP) an einem Anschluß der Mikroprozessor-vorrichtung (12);
wobei die erste Einrichtung (36, 38) als Reaktion auf das erste Signal das Vorrückens neuer Befehle in die Befehlsausführungspipeline einstellt, die gegenwärtig in der Befehlsausführungspipeline befindlichen Befehle ausführt, eine Abschaltroutine initiiert und die Erzeugung eines zweiten Signales (D_SUSPACK) bewirkt; und wobei die Steuereinrichtung (40) als Reaktion auf das zweite Signal (D_SUSPACK) ein Mikroprozessorvorrichtungsausgangssignal (SUSPACK) ausgibt und ein drittes Signal (F_IDLE) an den Pulsgenerator für interne Taktsignale anlegt, um zu bewirken, daß er die Zuführung des ersten Taktsignals (CLKB) zu der ersten Einrichtung (36, 38) deaktiviert.

10. Ein Verfahren nach Anspruch 9, dadurch gekennzeichnet, daß die Zuführung des zweiten Taktsignals (CLKA) zu der Steuereinrichtung (40) fortgesetzt wird, wenn die Zuführung des ersten Taktsignals (CLKB) zu der ersten Einrichtung (36, 38) deaktiviert wird.

11. Ein Verfahren nach Anspruch 9 oder Anspruch 10, dadurch gekennzeichnet, daß die Zuführung des ersten Taktsignals (CLKB) zu der ersten Einrichtung (36, 38) durch eine Deaktivierung des externen Leistungssteuersignals (SUSP) wieder aufgenommen wird.

12. Ein Verfahren nach einem der Ansprüche 9 bis 11, dadurch gekennzeichnet, daß die Frequenz der Taktsignale (CLKB, CLKA) durch ein außerhalb der Mikroprozessor-vorrichtung (12) erzeugtes Referenztaktsignal (CLK2) bestimmt wird.

## Revendications

1. Dispositif de microprocesseur (12) comprenant :
un premier moyen (36, 38) comprenant plusieurs sous-circuits (36, 38), l'un desdits sous-circuits incluant un pipe-line d'exécution d'instructions (48, 52) pour recevoir et exécuter des instructions ;
un moyen de commande (40) ; et
un générateur d'impulsions d'horloge internes (84) servant à produire un premier signal d'horloge (CLKB) et un second signal d'horloge (CLKA), ledit générateur d'impulsions d'horloge internes (84) délivrant ledit premier signal d'horloge (CLKB) audit premier moyen (36, 38), et ledit second signal d'horloge (CLKA) audit moyen de commande (40), ledit premier signal d'horloge (CLKB) commandant l'exécution d'instructions dans le pipe-line d'exécution d'instructions (48, 52) ;
ledit moyen de commande (40) étant raccordé à une borne dudit dispositif de microprocesseur (12) et étant sensible à la présentation à ladite borne d'un signal de commande de puissance (SUSP), produit de façon externe audit dispositif de microprocesseur (12), pour appliquer un premier signal (F_SUSP) audit premier moyen (36, 38) ;
ledit premier moyen (36, 38) étant sensible audit premier signal (F_SUSP) pour cesser de faire avancer de nouvelles instructions dans le pipeline d'exécution d'instructions, pour exécuter des instructions actuellement dans le pipe-line d'exécution d'instructions, pour lancer un programme de mise en veilleuse et pour provoquer la production d'un deuxième signal (D_SUSPACK) ; et
ledit moyen de commande (40) étant sensible audit deuxième signal (D_SUSPACK) pour sortir un signal de sortie de dispositif de microprocesseur (SUSPACK) et pour appliquer un troisième signal (F_IDLE) audit générateur d'impulsions d'horloge internes (84) pour le faire invalider la délivrance dudit premier signal d'horloge (CLKB) audit premier moyen (36, 38).

2. Dispositif de microprocesseur selon la revendication 1, dans lequel ledit premier moyen (36, 38) comprend un processeur d'exception (86) raccordé au pipe-line d'exécution d'instructions (48, 52), dans lequel ledit moyen de commande (40) applique ledit premier signal (F_SUSP) au processeur d'exception pour prévenir l'avancée de nouvelles instructions vers le pipe-line d'exécution d'instructions (48, 52), et dans lequel, après ladite exécution des instructions actuellement dans le pipe-line d'exécution d'instructions, le processeur d'exception sort un quatrième signal (D_EXCEPTION) pour permettre le lancement dudit programme de mise en veilleuse.

3. Dispositif de microprocesseur selon la revendication 1 ou la revendication 2, dans lequel ledit générateur d'impulsions d'horloge internes (84) continue à délivrer ledit second signal d'horloge (CLKA) audit moyen de commande (40) lorsque la délivrance dudit premier signal d'horloge (CLKB) audit premier moyen (36, 38) est invalidée.

4. Dispositif de microprocesseur selon l'une quelconque des revendications 1 à 3, incluant un moyen (40) pour permettre au générateur d'impulsions d'horloge internes (84) de reprendre la délivrance dudit premier signal d'horloge (CLKB) audit premier moyen (36, 38) en réponse à la suppression dudit signal de commande de puissance externe (SUSP).

5. Dispositif de microprocesseur selon l'une quelconque des revendications 1 à 4, dans lequel ledit pipe-line d'exécution d'instructions (48, 52) comprend un dispositif d'exécution d'instructions (52) raccordé pour recevoir des micro-instructions pour exécution à partir d'une mémoire de micro-instructions (48) sous les ordres d'un décodeur d'instructions (46).

6. Dispositif de microprocesseur selon la revendication 5, dans lequel ledit moyen de commande (40) interdit la sortie par ledit décodeur d'instructions (46) en appliquant ledit premier signal (F_SUSP) audit premier moyen.

7. Système informatique comprenant un dispositif de microprocesseur selon l'une quelconque des revendications 1 à 6, ledit système informatique comprenant en outre : une source de signal d'horloge de référence (CLK2) raccordéeaudit générateur d'impulsions d'horloge internes (84) pour déterminer la fréquence desdits premier et second signaux d'horloge (CLKB, CLKA) délivrés par le générateur d'impulsions d'horloge internes : et un moyen pour présenter, indépendamment desdits signaux d'horloge, ledit signal de commande de puissance externe (SUSP) à ladite borne de microprocesseur ; et dans lequel ledit signal de sortie de dispositif de microprocesseur (SUSPACK) fournit, audit système informatique, un signal d'un état de suspension de fonctionnement du dispositif de microprocesseur.

8. Système informatique selon la revendication 7, qui comprend une logique (18) sensible aux conditions de mise en oeuvre dudit système informatique, à la suite de la présentation dudit signal de puissance (SUSP), demandant la reprise du fonctionnement par ledit microprocesseur, pour supprimer ledit signal de commande de puissance pour permettre au moyen de commande (40) de provoquer la reprise, par ledit générateur d'impulsions d'horloge internes (84), de la délivrance antérieurement invalidée dudit premier signal d'horloge (CLKB).

9. Procédé de réduction de consommation d'énergie dans un dispositif de microprocesseur (12) pendant l'exécution d'une séquence d'instructions délivrée à un pipe-line d'exécution d'instructions (48, 52), comprenant les étapes :
de production (84), de façon interne au dispositif de microprocesseur (12), par un générateur d'impulsions d'horloge internes (84), d'un premier signal d'horloge (CLKB) et d'un second signal d'horloge (CLKA) ;
de délivrance dudit premier signal d'horloge (CLKB) à un premier moyen (36, 38) incluant le pipe-line d'exécution d'instructions (48, 52), et de délivrance dudit second signal d'horloge (CLKA) à un moyen de commande (40), ledit premier signal d'horloge (CLKB) commandant l'exécution d'instructions dans le pipe-line d'exécution d'instructions (48, 52);
en réponse à la présentation d'un signal de commande de puissance (SUSP), produit de façon externe audit dispositif de microprocesseur (12) à une borne dudit dispositif de microprocesseur (12), d'application, audit premier moyen (36, 38), d'un premier signal (F_SUSP) issu dudit moyen de commande (40);
en réponse audit premier signal, ledit premier moyen (36, 38) cessant de faire avancer de nouvelles instructions dans le pipe-line d'exécution d'instructions, d'exécution d'instructions actuellement dans le pipeline d'exécution d'instructions, de lancement d'un programme de mise en veilleuse et de déclenchement de la production d'un deuxième signal (D_SUSPACK) ; et
en réponse audit deuxième signal (D_SUSPACK), de sortie par ledit moyen de commande (40) d'un signal de sortie de dispositif de microprocesseur (SUSPACK) et d'application d'un troisième signal (F_IDLE) audit générateur d'impulsions d'horloge internes pour le faire invalider la délivrance dudit premier signal d'horloge (CLKB) audit premier moyen (36, 38).

10. Procédé selon la revendication 9, dans lequel la délivrance dudit second signal d'horloge (CLKA) audit moyen de commande (40) se poursuit lorsque la délivrance dudit premier signal d'horloge (CLKB) audit premier moyen (36, 38) est invalidée.

11. Procédé selon la revendication 9 ou la revendication 10, dans lequel on reprend la délivrance dudit premier signal d'horloge (CLKB) audit premier moyen (36, 38) par la suppression dudit signal de commande de puissance externe (SUSP).

12. Procédé selon l'une quelconque des revendications 9 à 11, dans lequel on détermine la fréquence desdits signaux d'horloge (CLKB, CLKA) par un signal d'horloge de référence (CLK2) produit de façon externe audit dispositif de microprocesseur (12).
